# EUROPEAN PATENT APPLICATION

(11) **EP 1 950 687 A2**
(43) Date of publication of application: **30.07.2008**
(21) Application number: 07254920.7
(22) Date of filing: 18.12.2007
(51) Int. Cl.: G06K 7/10, G02B 13/14, G06F 3/00, G06K 1/12, H04N 5/33

(54) **Barcode reader**

(30) Priority: 20.12.2006 US 642095
(71) Applicant: NCR Corporation, Dayton, Ohio 45479 (US)
(72) Inventor: Colville, James J., Liff Dundee DD2 5PJ (GB)
(74) Representative: Williamson, Brian

(57) **Abstract**

A barcode imaging apparatus having a source of electromagnetic radiation of a wavelength outside of the visible spectrum and an image acquisition device sensitive to that wavelength. An image of a barcode to be read is acquired at the non-visible wavelength and processed to extract information coded in the barcode. The non-visible radiation may be Infra Red radiation. Images may additionally be acquired at visible wavelengths. The source of radiation may be cycled on and off. A method of reading barcodes comprising the steps of illuminating a barcode to be read with radiation of non-visible wavelength and acquiring an image of the barcode at that wavelength.

## Description

The present invention relates to a barcode imaging system. It is particularly related to, but in no way limited to, a barcode reading system for an Automated Teller Machine (ATM).

Automated Teller Machines (ATMs) may be utilized to provide services in addition to the conventional one of supplying currency. For example, ATMs may allow users to pay bills. To enable this, certain information relating to the bill to be paid must be transferred to the ATM, for example the company to whom payment should be made and the amount to be paid. That information could be entered by the user, but a more convenient method is to read a barcode containing that information printed on the bill. The use of automated barcode reading simplifies the process for users and enables ATM machines to provide an improved service to their customers.

Barcodes are machine-readable patterns formed of contrasting areas which represent information. Common forms of barcodes may contain information in either one dimension or two dimensions. Single dimensional barcodes are formed of a set of parallel lines of varying width and spacing, which width and spacing encodes information into the barcode. Two dimensional barcodes are generally square or rectangular in outline and contain a pattern of contrasting areas which represent the information.

A convenient method of reading single-dimensional barcodes is to scan a narrow light source, for example a laser beam across the barcode, and to detect the lines of contrast as the beam moves across the barcode. This is the method commonly used in commercial barcode reading apparatus, for example those used in shop point of sale systems for reading barcodes on products. Two dimensional barcodes cannot be read using this laser technique as it is not, possible to scan the beam over the code in a sufficiently simple manner to obtain all of the required information.

An alternative technique of reading barcodes is to capture a digital image of the barcode using, for example, a CCD array, and process that image to identify the barcode area and decode the information represented by the barcode. This technique allows two dimensional barcodes to be read, but relies upon the ability to acquire a sufficiently detailed and illuminated image of the barcode.

A requirement of reading barcodes by processing an image is that the illumination over the area of the barcode is relatively constant, and in particular that there are no sharp changes in illumination over the area of the barcode. Such sharp changes can result in the confusion of lines in the barcode with the change in illumination thereby preventing correct decoding. Furthermore, a change in illumination across the barcode, combined with limitations in the contrast capability of the CCD, may prevent a sufficiently clear image being obtained of the whole barcode. For example, the area of the barcode with higher illumination may be washed out when the exposure is correct for the less illuminated part, and vice-versa. Scanning laser-based readers do not suffer from this problem since the light source is sufficiently bright to overcome any ambient light.

In order for automated reading of barcodes to be feasible, the read accuracy must be very high, and must be sufficiently simple to use that users can easily make use of the facility. Furthermore, since ATMs are located in uncontrolled environments, they must meet all relevant safety standards for apparatus accessible by the public. The use of laser-based barcode readers is therefore restricted as the bright light source of the laser is a safety hazard. Barcode readers in ATMs therefore utilize the image processing method.

ATMs may be located both indoors and outside, and therefore under both artificial and natural light of widely varying intensity. Furthermore, the illumination across a barcode can vary significantly due to shadows being cast across the barcode, for example due to the user's shadow falling on part of the barcode. The variation in illumination may be such that conventional CCD reading systems cannot read barcodes in all conditions, which is not acceptable as the services provided by ATMs must be operable the vast majority of the time.

The reading of barcodes by an ATM is a relatively unique problem since the system is subject to restrictions on the type of reader that can be used, and also the environment in which the ATM is located is almost totally uncontrolled. There is therefore a requirement for an improved barcode reading system capable of reading barcodes in a wide variety of lighting environments.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

There is provided a barcode imaging apparatus, comprising a source of electromagnetic radiation of a wavelength outside of the visible spectrum, and an image acquisition device, configured to be sensitive to a wavelength of electromagnetic radiation emitted by the source of electromagnetic radiation, wherein in use, a bar code to be read is illuminated by the source of electromagnetic radiation and an image of the barcode is captured by the image acquisition device at the wavelength of that radiation.

The barcode imaging apparatus may further comprise an image processing apparatus connected to the image acquisition device, configured to extract information contained in a barcode in an image captured by the image acquisition device.

The electromagnetic radiation may be Infra Red radiation.

The source of electromagnetic radiation may be at least one Light Emitting Diode.

The barcode imaging apparatus may further comprise a filter located in the optical path between the image acquisition device and the area whose image is captured thereby, wherein the filter passes the wavelength emitted by the source of electromagnetic radiation and attenuates other wavelengths.

The image acquisition device may be sensitive to visible wavelengths of electromagnetic radiation and to a wavelength emitted by the source of electromagnetic radiation.

The source of electromagnetic radiation may be configured to turn on and off during reading of a barcode.

The image acquisition device may acquire an image while the source of electromagnetic radiation is on.

The image acquisition device may acquire an image while the source of electromagnetic radiation is off.

There is also provided a method of acquiring an image of a barcode, comprising the steps of illuminating the barcode with electromagnetic radiation of a non-visible wavelength, and acquiring an image of the barcode at the non-visible wavelength.

The method of acquiring an image of a barcode may further comprise the step of processing the image to extract information encoded in the barcode.

Many of the attendant features will be more readily appreciated as the same becomes better understood by reference to the following detailed description considered in connection with the accompanying drawings. The preferred features may be combined as appropriate, as would be apparent to a skilled person, and may be combined with any of the aspects of the invention.

Embodiments of the invention will be described, by way of example, with reference to the following drawing, in which:
Figure 1 is a schematic diagram of an embodiment of the invention; and
Figure 2 is a schematic diagram of an embodiment of the invention.

Embodiments of the present invention are described below by way of example only. These examples represent the best ways of putting the invention into practice that are currently known to the Applicant although they are not the only ways in which this could be achieved.

In order to accurately read barcodes using CCD arrays in an ATM a relatively constant level of illumination must be provided over the area of the barcode. This must be provided independently of the ambient lighting conditions of the ATM, for example natural or artificial light. A particular problem occurs due to shadows being cast over the area of the barcode.

It has been observed that when an ATM is located outside, the luminance on a barcode to be read may vary between around 19,000 and 39,000 lux, or even be as high as 100,000 lux when exposed to direct sunlight. Luminance levels under artificial lighting may vary between about 400 & 600 lux but is highly dependent on lighting types and exposure to natural outdoor light. Shadows cast across a barcode can dramatically change the luminance, and may reduce it to between 500 and 700 lux. Contrast ratios across the area of a barcode may therefore exceed 150:1, or typically be around 50:1. Such contrast ratios prevent the CCD being able to obtain a sufficiently illuminated image of the whole barcode area and therefore reading of barcodes may not be possible when a shadow falls across the area.

In order to improve the image captured by the CCD it is possible to provide artificial illumination of the barcode to reduce the contrast over the area of the barcode. For example, such illumination may be provided generally over the area of the barcode, or focused particularly onto the barcode. The use of high-power LEDs may enable the luminance level in a shadowed area of the barcode to be increased to around 3,000 - 4,000 lux, thereby reducing the contrast ratio to around 10:1, which may be sufficiently low to read a barcode using a CCD array. However, this solution presents significant problems.

In order to provide a sufficiently high luminance, a relatively high power light source is required. For example, three 3W LEDs may provide sufficient illumination. The use of such high-power sources presents a number of problems. The size of such units is substantial and their fitment in ATMs is difficult. The luminance required to read the barcode is very high and leads to unpleasant glare when they are switched on. Also, the brightness of the illumination is such that any guide markings or illumination explaining to the user where to position the barcode become unreadable by the user, thereby reducing the usability of the ATM.

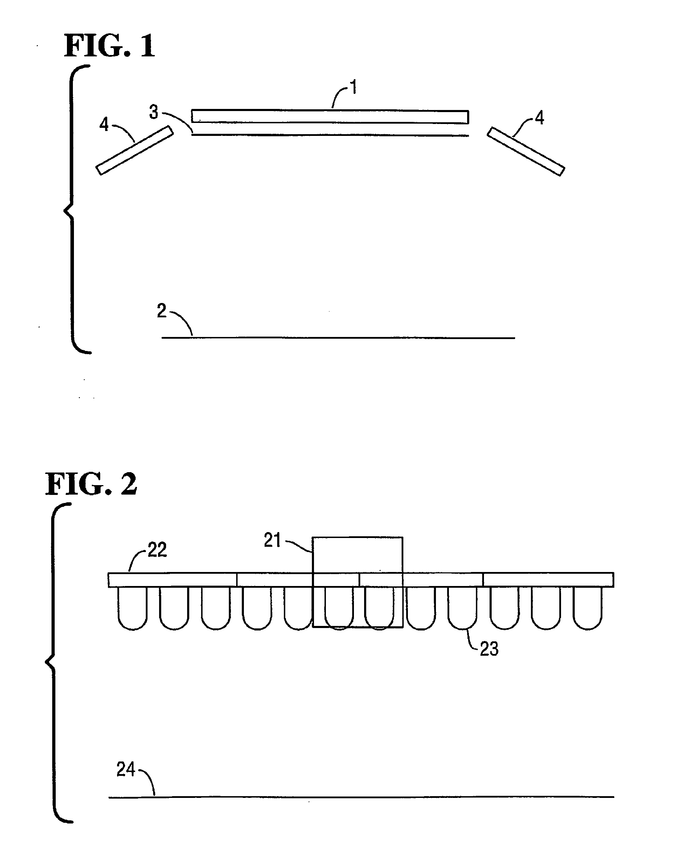

Figure 1 shows an embodiment of a barcode reading system for use in an ATM to overcome the difficulties of reading barcodes with uncontrolled illumination. A two dimensional CCD array 1, or other image acquisition device, is arranged to capture images of the area 2 in which barcodes will be presented for reading. An Infra Red (IR) filter 3 is positioned in front of the CCD array, which filter allows IR wavelengths to pass, but attenuates other wavelengths. IR emitting LEDs 4 are arranged to illuminate the barcode reading area with IR light. In an exemplary embodiment the CCD array is spaced between around 14cm and 22cm from the expected location of the barcode to be read.

To read a barcode positioned in the reading area 2, the barcode is illuminated by the IR LEDs and an image of the barcode at IR wavelengths is captured by the CCD array. That image is then processed using normal methods to decode the information in the barcode.

This embodiment overcomes the shadowing problems of the prior art since the barcode is evenly illuminated by the LEDs, therefore enabling a clear, even image to be acquired by the CCD. Furthermore, the IR content of ambient light, both artificial and natural is relatively low, and so the luminance required at IR wavelengths to overcome variations in ambient light illumination, is significantly lower than when visible light is used to illuminate the barcode. Additionally, since IR wavelengths are not visible to the human eye, no glare problems are created even if the luminance is very high.

It has been observed that when the barcode is imaged using IR wavelengths a barcode can be read even when there is a contrast ratio of over 200:1 in the luminance at visible wavelengths across the area of the barcode.

Certain types of printing techniques produce printed barcodes that are not visible at IR wavelengths. For example, thermal paper absorbs IR wavelengths and therefore a barcode printed on thermal paper is not visible at those wavelengths. In order to read barcodes printed using various techniques, the IR LEDs illuminating the barcode are repeatedly turned on and off, and images of the barcode captured in both circumstances. This allows barcodes visible under IR wavelengths to be read with improved accuracy, but still allows reading of barcodes that are not visible under IR by use of the images captured during the period when the IR LEDs are off. In an exemplary embodiment a cycle rate of between 2Hz and 4Hz may be utilized. A further advantage of cycling LEDs on and off is that the peak output power may be increased, thereby increasing the luminance on the barcode.

The capture of images from the CCD may be synchronized with the LEDs such that some images are captured when the LEDs are on, and some when they are off. Alternatively, the LEDs may be turned on and off faster than the CCD capture rate such that a single image contains information at both the IR and visible wavelengths. The IR filter of the first embodiment may be omitted to allow the capture of both visible and IR images, and furthermore the CCD must be sensitive in both IR and visible wavelength ranges.

Figure 2 shows a second embodiment. A CCD 21 and an array 22 of Infra Red LEDs 23 are provided to image a barcode in reading area 24. The LED array may be one or two dimensional, depending upon the area which requires illumination. In this embodiment no Infra-Red filter is provided and therefore all wavelengths of electromagnetic radiation fall on the CCD and will be detected dependent upon the CCD's sensitivity at each wavelength. The CCD is mounted in front of, or behind, the LED array, in contrast to the embodiment of Figure 1 in which LEDs are mounted either side of the CCD. In Figures 1 and 2 the barcode will be read most efficiently if its longer axis runs left to right along the figure, rather than being perpendicular to the page. The arrangement of Figure 2 may give a more even illumination of the barcode, thereby improving read accuracy. In alternative embodiments the CCD may be mounted within the array such that the CCD is surrounded by LEDs.

In addition to the use of IR other non-visible wavelengths of electromagnetic radiation may be used. For example, ultra-violet wavelengths could be utilized. Provided that the ambient light has a relatively low content at the wavelength in question, the advantages described above will be provided. The use of other non-visible wavelengths may also overcome other difficulties, for example barcodes printed on thermal paper may also be visible under different wavelengths. As will be apparent to the person skilled in the art, the imaging device must be sensitive at the appropriate wavelengths. In addition to the non-visible illumination, visible illumination may also be provided.

The imaging device, for example the CCD array, may be mounted within an ATM behind a transparent window. That window may also provide the filtering function described above, or that filter may be provided separately.

The LEDs may be mounted in the surface of an ATM fascia, or may be located behind a transparent window within the ATM. The LEDs may be configured to directly illuminate the barcode, or a lens system may be provided to focus the light into the required area. LEDs are described herein as the source of the light as they provide low-cost, high-reliability light source, but as will be apparent to the person skilled in the art any light source providing light at the appropriate wavelengths may be utilized.

The barcode reading area may be indicated by markings on the fascia of the ATM, by instructions provided on the ATM screen or by other means. For example, an area may be illuminated by a visible light source to indicate where the barcode should be positioned for reading.

The configuration of the IR, or other wavelength, source depends upon the particular implementation in which it is used. For example, a plurality of LEDs may be utilized to obtain the power and area of illumination required, or alternatively single LED may be utilized with or without a lens system.

References to "wavelength" herein are not intended to limit the radiation to a single wavelength, but rather to define the general wavelength region of the radiation.

Any range or device value given herein may be extended or altered without losing the effect sought, as will be apparent to the skilled person.

It will be understood that the benefits and advantages described above may relate to one embodiment or may relate to several embodiments. It will further be understood that reference to 'an' item refer to one or more of those items.

It will be understood that the above description of a preferred embodiment is given by way of example only and that various modifications may be made by those skilled in the art. The above specification, examples and data provide a complete description of the structure and use of exemplary embodiments of the invention. Although various embodiments of the invention have been described above with a certain degree of particularity, or with reference to one or more individual embodiments, those skilled in the art could make numerous alterations to the disclosed embodiments without departing from the spirit or scope of this invention.

## Claims

1. A barcode imaging apparatus, comprising
a source of electromagnetic radiation of a wavelength outside of the visible spectrum, and
an image acquisition device, configured to be sensitive to a wavelength of electromagnetic radiation emitted by the source of electromagnetic radiation, wherein
in use, a bar code to be read is illuminated by the source of electromagnetic radiation and an image of the barcode is captured by the image acquisition device at the wavelength of that radiation.

2. A barcode imaging apparatus according to claim 1, further comprising
an image processing apparatus connected to the image acquisition device, configured to extract information contained in a barcode in an image captured by the image acquisition device.

3. A barcode imaging apparatus according to claim 1 or claim 2, wherein the electromagnetic radiation is Infra Red radiation.

4. A barcode imaging apparatus according to any preceding claim, wherein the source of electromagnetic radiation is at least one Light Emitting Diode.

5. A barcode imaging apparatus according to any preceding claim, further comprising a filter located in the optical path between the image acquisition device and the area whose image is captured thereby, wherein the filter passes the wavelength emitted by the source of electromagnetic radiation and attenuates other wavelengths.

6. A barcode imaging apparatus according to any preceding claim, wherein the image acquisition device is sensitive to visible wavelengths of electromagnetic radiation and to a wavelength emitted by the source of electromagnetic radiation.

7. A barcode imaging apparatus according to any preceding claim, wherein the source of electromagnetic radiation is configured to turn on and off during reading of a barcode.

8. A barcode imaging apparatus according to claim 7, wherein the image acquisition device acquires an image while the source of electromagnetic radiation is on.

9. A barcode imaging apparatus according to claim 7, wherein the image acquisition device acquires an image while the source of electromagnetic radiation is off.

10. A method of acquiring an image of a barcode, comprising the steps of
illuminating the barcode with electromagnetic radiation of a non-visible wavelength, and
acquiring an image of the barcode at the non-visible wavelength.

11. A method according to claim 10, further comprising the step of processing the image to extract information encoded in the barcode.
